# EUROPEAN PATENT APPLICATION

(11) **EP 1 990 576 A1**
(43) Date of publication of application: **12.11.2008**
(21) Application number: 07710985.8
(22) Date of filing: 15.02.2007
(51) Int. Cl.: F23G 7/02, F23G 7/10, C01B 33/20, C04B 18/24

(54) **A METHOD FOR UTILIZING BIOMASS MATERIAL AND A METHOD FOR USING INDUSTRIAL FUEL**

(30) Priority: 21.02.2006 CN 200610055114
(71) Applicant: Qin, Caidong, Liu An, Anhui 237192 (CN)
(72) Inventor: Qin, Caidong, Liu An, Anhui 237192 (CN)
(74) Representative: Schmidt, Steffen J.
(86) International application number: PCT/CN2007/000567
(87) International publication number: WO 2007/095857

(57) **Abstract**

The present invention provides methods of utilizing biomass materials, in which biomass materials are mixed directly with the reactants and the biomass materials while in combustion can directly heat up the reactants to the temperature required for the chemical reaction to take place. Such chemical reaction takes advantage of the heat energy, carbon element and/or silicon element that are inherently contained within biomass materials. For instance, biomass materials produce powdery or lumpy alkali metal silicates when chemically reacting with alkali metal compounds, synthesize black powder when reacting with nitrates, redox sulfates and decompose carbonates, etc. The present invention is characterized with high heat utilization, no need for external heat source, low power consumption, greatly reduced equipment costs, and the significantly simplified process.

## Description

### BACKGROUND OF THE INVENTION

### Field Of The Invention

The present invention relates to methods of utilizing biomass materials, and more particularly, to methods of producing alkali metal silicates by using heat energy of biomass materials for industrial reactions.

### Description Of The Background Art

Biomass materials are mainly acquired from wood and forest waste, agricultural waste, residues of agriculture and forestry processing, oil plants, animal feces, garbage of both urban and rural daily life, and so on. Biomass materials have the advantages of being renewable, clean, widely distributed and remarkably abundant, and therefore have been widely used in industrial production.

Biomass materials release large amount of heat while in combustion, and are a source of energy to substitute coal, natural gas and other mineral energy as the heat source for heating, power generation, industrial chemical reaction, and so forth.

Biomass materials contain a large amount of carbon, silicon and other elements. For example, rice straw, wheat straw, stalks of soybeans, corn ,sorghum and other crop, grain chaff and rice husks contain about 30 percent of carbon and as much as 20 percent of silicon oxide (some of their ashes contain up to 60 percent of silica). Although firewood, weed, tree branches and leaves, sawdust, tree farm waste, bagasse contain negligibly small amount of silicon -- usually less than 2%, they contain up to 90 percent of carbon. Clearly, biomass materials become important industrial raw materials of mineral resources on the surface of the earth. There are some existing technologies that have made use of rice husk ashes to produce sodium silicate and activated carbon.

In methods of utilizing biomass materials as the heat source for industrial reaction, the one that has higher efficiency of heat utilization is first to compress biomass materials into energy-densified fuel blocks, and then to put the fuel blocks into a furnace to combust and release heat. The released heat will be transmitted from the external of the high-temperature reactor to the entire reactor through either heat conduction or heat radiation, and then the heat can be indirectly passed onto the reactants inside the reactor to conduct industrial reaction, such as decomposition, reduction, oxidation or synthetic reactions. Or, the released heat can be transported to the high-temperature reactor through pipelines. Nevertheless, in such a method of utilizing biomass materials as a heat source, combustion and heat release take place in the furnace external to the high-temperature reactor,while the reactants' heat absorption takes place inside the reactor. Therefore the biomass materials in combustion cannot be in direct contact with the reactants. The released heat cannot be directly used onto the reactants, and therefore the efficiency of energy utilization cannot reach to a higher level since it is an external heat source that can only act indirectly on the reactants. Moreover, such method implies that two sets of equipment must be used: one for combustion and heat generation, the other for chemical reaction, because the two events take place physically in two different places, which results in high cost in production equipment at the early stage of the production, more complex operation process, and complicated production technique in control of combustion process and reaction process.

Before combustible biomass materials are used as mineral resources to produce sodium silicates, sodium silicates are primarily produced through a method known as dry production process, in which two mineral materials, soda ash and quartz sand, are used as reactants. The reactants must be melted first under a high temperature inside the reactor, so that the chemical reaction can take place to produce sodium silicates of various modulus, especially those of high modulus. The external sources of heat, such as coal, gas, natural gas, heavy oil, electricity and so forth, must be used to heat the reactor. Similarly, in such dry production process, the external sources of heat while in combustion are not in direct contact with the reactants. Therefore, efficiency of heat utilization cannot reach a high level. Moreover, the process has disadvantages, such as requirements of more equipment, high production cost, and more complex production techniques.

The dry production process costs very high in energy. The reaction activeness of quartz sand is extremely low because of its crystalline structure, so a reaction condition of high temperature of 1300°C or above must be provided using some high-density energy source, which results in enormous amount of energy consumption. Although biomass materials are of low cost, the energy within them is of low-density and thus unable to meet the energy requirement. In addition to more complex production techniques, more energy consumption will be further needed in producing powdery or instantly-dissolvable alkali metal silicates of various modulus, in which a series of complicated processes are involved, such as dissolution, modulus adjustment, concentration, evaporation, spray drying in high-temperature air, and re-crystallization, according to the publicized technologies in Japan patent 03-164422 and the United States patent US5,229,095.

Because of the drawback that quartz sand is of low reaction activeness and can hardly start a chemical reaction under a relatively low temperature, a wet production process has been developed, in which liquid caustic soda and quartz sand are used to carry out a chemical reaction inside a reactor with added temperature and pressure to produce alkali metal silicates. For example, China patent CN02113068 published a wet production method in which fine quartz sand is mixed with liquid caustic soda, through admixture, agitation, dehydration, smashing, etc., to produce anhydrous sodium silicates. Since rice straw and rice husks contain silicon oxide, their ashes have already been used to replace mineral quartz sand in the wet production method to producing alkali metal silicates, as are shown in China's patents CN88105429.1, CN98113837.3 and CN90106479.3 for production of anhydrous sodium silicates. Although the wet production process requires low energy consumption for a rapid chemical reaction to take place, such process can hardly be used to produce silicate products of high modulus. Like the dry production process, the wet production process has the drawbacks that the external sources of heat while in combustion are not in direct contact with the reactants, that efficiency of heat utilization cannot reach a high level, and that production cost is very high with two or more sets of equipment needed and more complex production techniques involved.

In the above-mentioned wet production process of using biomass materials, the silicon element contained in rice/wheat straw or rice husks has been utilized through burning these biomass materials into ashes in advance. However, the process of producing the ashes does not take place inside the reactor to let the biomass materials directly contact the reactants, and therefore the heat energy inherently contained within the biomass materials cannot be released and utilized for the needed energy in the chemical reaction to produce anhydrous silicates. For instance, in the aforementioned patent CN98113837.3, efficiency of energy utilization is poor,due to rice/wheat straw and rice husks are combusted in a half-undergrounded normal furnace and the generated heat is wastefully released to the air. Furthermore, the heat needed for the chemical reaction must be provided through other separate external energy sources to result in double waste of energy. The whole process certainly does not meet energy utilization efficiency requirements. Moreover, the use of caustic soda solution to dissolve the silicon oxide in ashes of rice/wheat straw or rice husks is a hydrothermal reaction that need consume a large amount of water resources. Further, the step of sodium silicates dehydration not only makes the process more complicated but also consumes additional large amount of energy wastefully.

In short, the existing technologies make use of external sources of heat for the energy needed in industrial chemical reactions, such external sources including biomass, heavy oil, ethanol, coal, gas, natural gas and so on. The external sources of heat while in combustion are not in direct contact with the reactants, which results in the production process to use separate sets of equipment: one for combustion and heat release, the other for the industrial chemical reaction to take place. Fuel combustion and endothermic reaction take place spatially not synchronized, and the heat usage from fuel combustion is unitary. Therefore the efficiency of energy utilization cannot reach a higher level. Moreover, most of the production projects of industrial reactions require multiple sets of equipment for combustion and heat generation as well as for chemical reaction, which results in high early-stage capital investment in production equipment, more complex operation process and complicated production techniques, in addition to huge amount of energy consumption.

### SUMMARY OF THE INVENTION

The primary purpose of the invention is to provide a method to utilizing biomass materials, in which biomass materials are in direct contact with the reactants so that the heat energy inherently contained within biomass materials will be released onsite and used as an internal heat source, while in combustion, directly onto the reactants. Heat utilization can reach very high level, while the energy consumption is kept low. In addition, the method makes it applicable that the energy supply equipment for fuel combustion is combined with the equipment for chemical reactions into one set of equipment, which can significantly reduce costs for equipment and considerably simplify operational processes.

The second purpose of the invention is to provide a method to utilizing biomass materials, in which the silicon element is distributed inside straw tissue in states of ion, molecular or nano, so that its reaction activeness is higher than quartz sand and the reaction temperature is lower, The heat released from combusting biomass materials can be utilized as an internal heat source in the dry production process to produce powdery or lumpy anhydrous alkali metal silicates, in which only a simple and straightforward workflow of mixing the biomass materials with the reactants and then combusting the biomass materials is needed. The process is extremely simple, very efficient in heat utilization, low in energy consumption, and cost-effective in equipment and operation. In addition, the method makes it applicable that the energy supply equipment for fuel combustion is combined with the equipment for chemical reactions into one set of equipment, which can significantly reduce costs on equipment and considerably simplify operational processes or even without using any particular equipment to directly combust the fuel and produce chemicals on a suitable field to further reduce the production cost.

The third purpose of the invention is to provide a method to utilizing biomass materials, in which the heat released from combusting biomass materials can be utilized as an internal heat source in burning and processing industrial waste and residue. The process is very efficient in heat utilization, low in energy consumption, less requirement of equipment, cost-effective in operation, simple in technique, as well as complying with environmental protection requirements.

The fourth purpose of the invention is to provide a method to utilizing biomass materials, in which the carbon element and heat energy inherently contained in biomass materials can be utilized to redox sulfates, where the heat released onsite from combusting biomass materials can be utilized as an internal heat source. The process is very efficient in heat utilization, low in energy consumption, less requirement of equipment, cost-effective in operation, and simple in technique.

The fifth purpose of the invention is to provide a method to utilizing biomass materials, in which the carbon element, silicon oxide and heat energy released onsite from combusting biomass materials can be utilized to make synthesis gunpowder. The process makes use of renewable biomass materials to replace sulfur and powdery carbon which are used in the conventional method of black powder production, and therefore saves the mineral resources. In addition, the production cost is low and the technique is simple.

The sixth purpose of the invention is to provide a method to utilizing biomass materials, in which the heat energy inherently contained in biomass materials can be utilized to decompose carbonates and refine pyrite, where the heat released onsite from combusting biomass materials can be utilized as an internal heat source. The process is very efficient in heat utilization, low in energy consumption, less requirement of equipment, cost-effective in operation, and simple in technique.

The technical scheme of the invention is to utilize biomass materials in such a way that the biomass materials while in combustion are directly mixed with the reactants so that the heat released from the combusting biomass materials can heat up the reactants directly to the reaction temperature and cause the chemical reaction to take place.

According to the second purpose of the invention, the present invention provides a dry production method to producing powdery or lumpy anhydrous alkali metal silicates, in which the heat released from the combusting biomass materials heats up the reactants for the chemical reaction to produce alkali metal silicates. The chemical reaction equations are from, but not limited to:

2NaOH + SiO₂ → Na₂SiO₃ + H₂O,

Na₂CO₃ + SiO₂ → Na₂SiO₃ + CO_{2,} and

Na₂SO₄ + SiO2 → Na₂SiO₃ + SO₃,

The general equation is:

Na₂OX + SiO₂ → Na₂SiO₃ + X.

Based on the amount of silicon contained in the biomass materials, there are three scenarios for the chemical reactions. In the first scenario where the biomass materials contain no silicon, the reactants will be the silicon-containing mineral and alkali metal compound. In the second scenario where the biomass materials contain silicon, the reactants will be the compound that contains alkali metal element in amount proportional to the equivalence of silicon contained in the biomass materials. This scenario is advocated by the present invention to adopt at a higher priority. In the third scenario where some biomass materials contain silicon and some biomass materials contain no silicon, the reactants will be the alkali metal compound and fine quartz powder and the amount of alkali metal element is made proportional to the average equivalent weight of silicon contained in the biomass materials.

According to the third purpose of the invention, the present invention provides a method to utilizing biomass materials, in which the heat released from combusting biomass materials can be utilized as an internal heat source in burning and processing industrial waste. The concrete steps include:
A. Use biomass materials to filter industrial effluent to arrest the solid residues from industry effluent;
B. Burn the biomass materials containing the arrested solid residues, so that the heat released from the combusting biomass materials can incinerate industrial wastes by the heat released from combusting biomass materials.

In the preferable scheme, the following step is added between Step A and Step B:
Dry the wet biomass materials that contain solid residues obtained through the filtration in Step A.

In the preferable embodiment, the solid residues arrested by biomass materials in Step A include bagasse, furol dregs, and residues within the crimson effluent in paper manufacture. A further step is added between Step A and Step B:
Step C. Add alkali metal compound of the amount proportional to the equivalence of silicon contained in the biomass materials containing the arrested solid residues.
Step C facilitates production of alkali metal silicates while the heat released from combusting biomass materials is simultaneously used to burn out industrial waste.
According to the fourth purpose of the invention, the carbon element and heat energy released onsite from combusting silicon-free biomass materials can be utilized to redox sulfates. Such silicon-free biomass materials can be selected from weed, sawdust, or tree branches and leaves. The major products of the redox reaction are sulfite and/or sulphide and/or sulphur dioxide as well as the corresponding metal oxides.
According to the fifth purpose of the invention, the carbon element, silicon oxide and heat energy released onsite from combusting biomass materials are utilized in the chemical reaction with alkali metal nitrate to produce gunpowder, because such reaction causes abrupt massive volume expansion. In the preferable scheme, the biomass materials are selected from grain hull, rice husks and sawdust, or from straw or wood which will be further smashed into granular particles in order to make the evenly-mixed compound.

According to the sixth purpose of the invention, the heat energy released onsite from combusting biomass materials are utilized to decompose carbonates and refine pyrite.

For an example , when the reactant is calcium carbonate, the chemical reaction will mainly produce calcium oxide.

For an example, when the reactant is pyrite, the chemical reaction will mainly produce sulphur oxide and ferric oxide.

In the above-mentioned methods of the invention, the biomass materials can be put into a furnace first, and then ignited; during combustion of the biomass materials, the reactants are scattered into the furnace to mix with the biomass materials for the chemical reaction. Or, the biomass materials are pre-mixed with the reactants first, and then the mixture is ignited for the chemical reaction to take place.

The above-mentioned methods of the invention provide effective solutions to utilizing biomass materials at low cost and in large industrial scale. In such methods, production equipment may not be required; the combustion and production can take place anytime in any suitable location, even without any supply of electricity; the production can therefore be carried out even in the vast rural area.

In the preferable scheme of the invention, the mixture of biomass materials and reactants can be put in a furnace to combust, where the furnace can be very simple as long as it is able to accommodate the mixture of biomass materials and reactants, and let the biomass materials combust and release heat. The furnace can even be simplified as a flat-plate stove as long as the biomass materials can continuously combust and release heat through constantly stirring the biomass materials to reach the reaction temperature and produce the corresponding product.

Preferably, a furnace with one central vent is adopted.

In the preferable scheme, the biomass materials are mixed with the reactants in advance.

In the preferable scheme, heavy oil or alcohol can be used to soak the biomass materials.

A practical scheme is: firstly, dissolve the soluble reactants into water; then fully immerse the biomass materials in the solution; after the reactants in the solution are instilled into the biomass materials, dry the biomass materials. This scheme is typically suitable for the case where all of the reactants are soluble, such as, in the method that silicon-containing biomass materials and soluble alkali metal compound are used to produce alkali metal silicates, and in the method that silicon-free biomass materials are used to redox soluble sulfates or produce gunpowder. However, there are some insoluble solid reactants used in the method of utilizing silicon-free biomass materials to produce silicates or decompose calcium carbonate, pyrite and calcium sulfate. After the soluble reactants are dissolved in water, a further step is needed to mix the insoluble reactants with the biomass materials. So such process becomes more complex and is therefore not adopted at a priority.

In the preferable scheme, the biomass materials along with the reactants are weaved into ropes, and then the ropes are pinched inside the furnace around the central vent.

In the preferable scheme, the biomass materials are made into fuel blocks with a central vent, and then the fuel blocks are put into the furnace with the fuel block's central vent in alignment with the furnace's central vent in the step of puting it in a furnace.

In the preferable scheme, the biomass materials and the reactants are layered alternately to form fuel blocks with a central combustion channel, which is kept in alignment with the furnace's central vent.

In the preferable scheme, more of the reactants are put in the top portion of the biomass materials and less in the low portion, so that the reactants after melting flow downwards to enhance the chemical reaction.

In the preferable scheme, after the biomass materials are ignited, air will be blown into the furnace via the furnace's central vent to enable combustion to take place around the area of the ventilation path.

In the preferable scheme, a heavy and grid-shaped object is put on top of the biomass materials. The heavy object can move freely downwards along with the advance of combustion to keep the biomass materials pinched inside the furnace.

In the preferable scheme, the furnace also has a grate with tracks to divide the furnace into top and bottom combustion chambers. The mixture of the biomass materials and reactants is sent into the top combustion chamber through a pulley along the grate's tracks; the ashes drop into the bottom combustion chamber and continue combusting and participating in the chemical reaction.

According to the overall idea of the present invention, this invention also provides a method to utilizing industrial fuels, in which industrial fuels are directly and evenly mixed with the reactants inside a furnace so that the heat from the combusting industrial fuels will heat up the reactants directly to the reaction temperature and cause the chemical reaction to take place.

In the preferable scheme, industrial fuels include coal, heavy oil, solid alcohol, and reactants can be alkali metal compound and quartz sand. The major product of the corresponding chemical reaction is alkali metal silicates.

Of course, the reactants can be sulfates to generate sulphur dioxide and the corresponding metal oxide through a redox reaction; or, the reactants include carbonate to generate carbon dioxide and the corresponding metal oxide through a decomposition reaction.

Comparing with the existing techniques of the art, the present invention has significant effect and remarkable benefits. In detail,
a) The invention provides a method to utilizing biomass materials, in which biomass materials are in direct contact with the reactants so that the heat energy inherently contained within biomass materials will be released onsite, while in combustion, directly onto the reactants. No external energy source is needed. Furthermore, the extra heat from the combusting biomass materials can be simultaneously supplied to other heat applications. That is, the heat can be used for two or more purposes at the same time, so that heat utilization is doubled. The method significantly reduces energy consumption and considerably simplifies operational processes.
b) The preferable scheme of the invention utilizes the heat, silicon and carbon elements inherently contained in renewable biomass materials to produce anhydrous alkali metal silicates, especially, lumpy or powdery alkali metal (sodium, potassium, calcium and magnesium) silicates in a direct and single step using a straightforward technique, in which biomass materials are in direct contact with the reactants to ensure that the heat released from the combusting biomass materials is directly applied onto the reactants. No external energy source is needed. This invention provides a new technique in the silicon chemical industry, in which the process of heat releasing from the combusting biomass materials, such as rice/wheat straw or rice husks, is seamlessly unified with the process of silicate production. Comparing with the traditional techniques in the silicon chemical industry, the new technique opens up a new way in which anhydrous silicates are produced through solid phase chemical reaction without consuming external energy or water. At the same time, the invention makes it applicable that the energy supply equipment can be combined with the chemical reaction equipment into one, which can significantly reduce costs for production equipment. Therefore, the invention has higher commercial value.
c) The invention utilizes heat and silicon element within biomass materials to burn out the residues from industrial effluent, which are mixed with the biomass materials and alkali metal compound, and simultaneously produce alkali metal silicates through the chemical reaction with reactants of the alkali metal compound. The process is very efficient in heat utilization, low in energy consumption, cost-effective in operation, and simple in technique.
d) The invention utilizes heat and carbon element within biomass materials and heat released onsite from combusting biomass materials to produce sulfite and/or sulphide and/or sulphur dioxide as well as the corresponding metal oxides through the redox reaction between sulfate and partially combusted carbon. The process is very efficient in heat utilization, low in energy consumption, cost-effective in operation, and simple in technique.
e) The invention utilizes silicon oxide and carbon element in biomass materials and heat released onsite from combusting biomass materials to make synthesis gunpowder. The process makes use of renewable biomass materials to replace sulfur and powdery carbon which are conventionally used in the black powder production, and therefore saves the mineral resources, reduces production cost, and simplifies the production technique.
f) The invention utilizes heat released onsite from combusting biomass materials to decompose carbonates and refine pyrite. The process is of high heat utilization, no need for external heat source, low power consumption, greatly reduced equipment costs, and the significantly simplified technique.

### BRIEF DESCRIPTION OF THE DRAWINGS

FIG. 1 shows a schematic diagram of the mixture of the biomass materials and reactants, where the mixture is made into fuel blocks with a central ventilation channel.
FIG. 2 is a top view of Fig.1.
FIG. 3 shows a schematic diagram of the cross-sectional view of the cylindrical furnace with a vent in the bottom of the furnace, and at the bottom of the furnace a steel frame is attached to prevent loose biomass materials from falling off during combustion.
FIG. 4 shows a schematic diagram of the cross-sectional view of the cylindrical furnace with a vent in the top of the furnace, and at the bottom of the furnace a steel frame is attached to prevent loose biomass materials from falling off during combustion.
FIG. 5 is a phase diagram of Na₂O-SiO₂.
FIG. 6 shows a schematic diagram of the preferred furnace with the top and bottom combustion chambers, wherein the arrow indicates the vent and the direction of air flow.

### EMBODIMENTS

### Embodiment 1

The present invention provides a method to utilizing biomass materials. Combustion of biomass materials with presence of enough air is typically able to reach a temperature of around 300∼1000°C. Hence the present invention is applicable to a scenario where the reactants must be directly heated up to a temperature of 300∼1000°C for the corresponding chemical reaction to take place. The combustion temperature can reach higher if the combusting biomass materials are provided with adequate oxygen. Biomass materials in this embodiment are utilized as a heat source for the chemical reactions of producing alkali metal silicates. In detail, the reactants and their weight proportion are still the same as those used in the existing dry production method of producing sodium silicates; that is, the reactants are alkali metal inorganic salt, pulverized coal and fine quartz powder, where alkali metal refers to sodium, potassium, calcium or magnesium, and alkali metal inorganic salt is sulfate or carbonate. First, the reactants are evenly mixed with the biomass materials; then put the mixture on a flat plate. After the mixture of the biomass materials and the reactants is ignited, the heat released from the combusting biomass materials will melt down the reactants so that the corresponding chemical reaction takes place to produce lumpy or powdery alkali metal silicate as a main product. In the whole process, combustion of the biomass materials can reach a temperature of 600°C by constantly stirring the biomass materials and supplying adequate oxygen.

Here the biomass materials are either those containing a larger amount of silicon, such as chaff, rice husks, or straw of rice/wheat, or stalks of soybeans/corn/sorghum etc., or those containing little silicon, such as firewood, weed, tree branches and leaves, sawdust, tree farm waste, bagasse, furol dregs, and waste from paper mill.

In this embodiment, the efficiency of heat utilization is high, because biomass materials are directly and evenly mixed with the reactants and the heat released onsite from combusting biomass materials is used directly to heat up the reactants. Powdery or lumpy anhydrous alkali metal silicates are produced just through simple steps in simple technique and low energy consumption. The production process does not require any special equipment and can be carried out in any roughly flat area. So, both investment and cost for the production are extremely low.

As a note, the purity of product is not high, because ashes from biomass materials combustion and reactants impurities after the reaction remain in the product as the combustion and reaction process can take place on almost any field. If such a product of high purity is needed, the product from the present invention can be used as an intermediate output, so that the product of high purity can be further separated and extracted. But usually, alkali metal silicates are mainly used in detergent manufacture, paper mill cleansing, or as dispergator in cement, ceramic manufacture, which does not require high purity of alkali metal silicates. Moreover, the remaining carbon after biomass materials combustion has adsorption effect and hence becomes an active ingredient of the product. Therefore, the output of the process can be regarded as a finished product directly used as additive in detergent manufacture.

### Embodiment 2

This embodiment shares the same principle and effect as Embodiment 1 above. The difference is that the selected biomass materials are silicon-free and the reactants include silicon mineral and alkali metal compounds.

The silicon-free biomass materials are selected from weed, sawdust, tree branches and leaves.The compounds containing alkali metal element are selected from hydroxides, alkali metal inorganic acid salts and alkali metal organic acid salts, wherein the alkali metal hydroxides are selected from sodium hydroxide and potassium hydroxide; the alkali metal inorganic acid salts are selected from sodium carbonate, potassium carbonate, sodium sulfate, potassium sulfate, sodium hydrochloric acid, potassium hydrochloric acid, sodium phosphate and potassium phosphate; the alkali metal organic acid salts are selected from organic acid sodium and organic acid potassium; the silicon mineral is selected from fine quartz powder, diatomite and white clay.

Because sawdust , tree branches and leaves, weed and the like contain little silicon, certain amount of fine quartz powder is added to the chemical reaction in order to produce the silicate of required modulus. In detail, first, evenly mix the quartz powder with the alkali metal compound, and then put together with the biomass materials to combust for the chemical reaction to take place. Optimally, the weight ratio among silicon-free biomass materials, alkali metal compound (e.g., sodium hydroxide), and silicon mineral is ∼2-3 : 1 : 0.7.

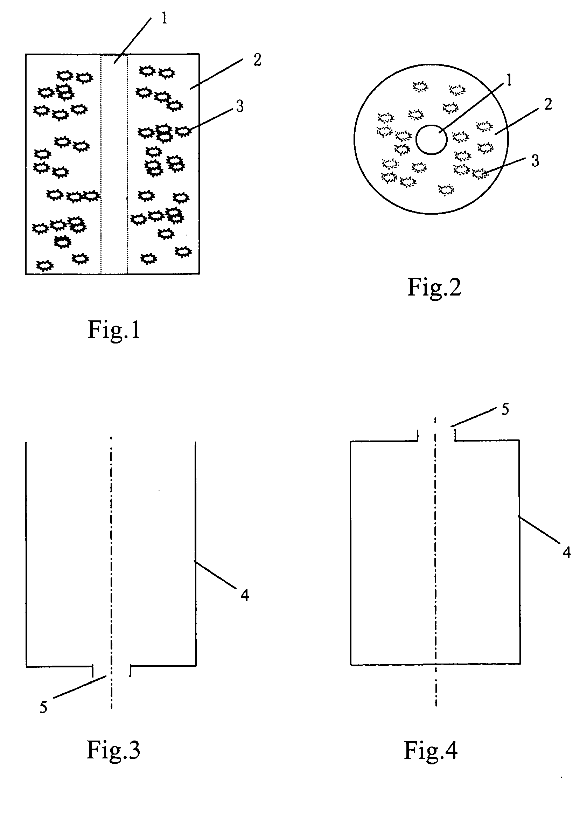

This embodiment mainly utilizes the heat released from combusting biomass materials to heat up reactants for the chemical reaction to take place. Comparing with embodiment 1, there is an improvement that the biomass materials and the reactants are put into a furnace to combust and react. Optimally, the furnace, as is illustrated in FIG. 3 and FIG. 4, has the central vent 5 inside the furnace 4, wherein the vent 5 can either be at the top or the bottom of the furnace 4. To improve production efficiency, the biomass materials, before being ignited, need to be evenly mixed with the reactants in advance.

The biomass materials can be evenly mixed with the reactants in advance and outside the furnace, As shown in FIG. 1 and FIG. 2, optimally, the mixture of the biomass materials and reactants 3 is made into cylinder-shaped fuel blocks 2 with the central ventilation channel 1. As illustrated in FIG. 3, the fuel blocks 2 are put into the cylinder-shaped furnace 4 with the central ventilation channel 1 of the fuel blocks 2 in alignment with the furnace's central vent 5.

In order to obtain a stable combustion state for efficient utilization of the heat released from combustion, when the vent 5 as shown in FIG. 3 is at the bottom of the furnace, ignition can be started from the top center of the central ventilation channel 1; of course, ignition can be started from the bottom center of the central ventilation channel 1, then the combustion will readily become fierce and facilitate the synthetic reaction to produce silicates; when the vent 5 as shown in FIG. 4 is at the top of the furnace, ignition can be started from the bottom center of the central ventilation channel 1; of course, ignition can be started from the top center of the central ventilation channel 1, then the combustion will readily become fierce, and facilitate the synthetic reaction to produce silicates.

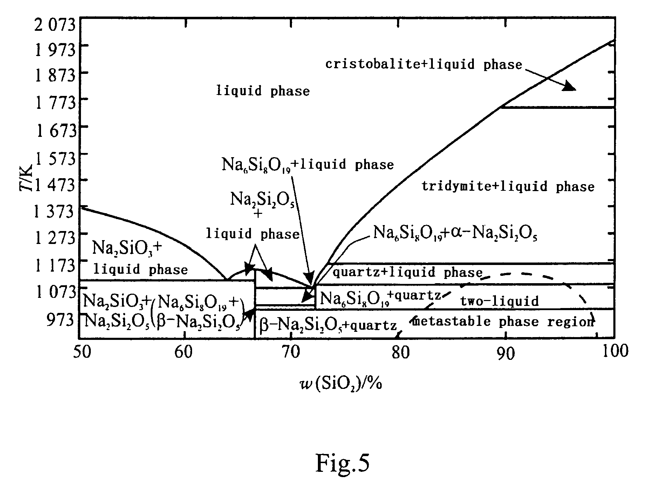

Because temperature inside the furnace may be different at a different location, the output silicates may have different modulus. According to the temperature measurement of the furnace, the temperature range is 300 ∼ 1000°C with most of region inside the furnace reaching a temperature of 500 - 800°C. Since the reaction temperature affects the modulus of the output silicates, it has been determined that the modulus of the output silicates can be 0.5, 1, 2 or higher. The output product is closely related with the combustion state, especially the reaction temperature, and the temperature is influenced by the furnace's ventilation condition and the distribution of biomass materials. In the chemical reaction at the above temperature range, the main product is sodium metasilicate (Na₂SiO₃). The above finding coincides with the phase diagram of Na₂O-SiO₂ shown in FIG. 5.

In the preferable scheme, to obtain the product of higher modulus, a blower of 100 - 3000W can be used to blow adequate air toward the central ventilation channel 1 according to the amount of the biomass materials in use, so that combustion of the fuel blocks 2 mainly takes place within the central region, and the biomass materials surrounding the central ventilation channel 1 will be gasified, decomposed and combusted gradually.

After 15 ∼ 30 minutes complete combustion and reaction, the mixture of biomass materials and alkali metal compound turns out to be a lumpy mixture of silicate and black carbon. A test has shown that the generated silicate product, after being crushed and separated from the black carbon, has characteristics of instant dissolvability: the dissolution speed is greater than 0.5 g/sec in a solution of 10 grams of silicate every 100 grams of water.

### Embodiment 3

This embodiment shares the same principle and effect as Embodiment 2 above. The difference is that the selected biomass materials are silicon-containing and the reactants include compounds of alkali metal element.

The selected biomass materials that contain silicon are rice straw, rice husks, wheat straw, corn and sorghum stalks, and the compounds containing alkali metal element are identical to those specified in Embodiment 2.

In order to produce the silicate of required modulus, the alkali metal compound must be in a proper weight ratio to the silicon contained within the biomass materials. For example, air-dry rice straw contains about 15∼ 20% of silicon oxide. To obtain a silicate with modulus of 1 - 2, the optimal weight ratio between air-dry rice straw and the alkali metal compound is in the rage of 3 - 10 : 1, in which the rice straw is added slightly more to fully utilize the higher valued alkali metal compound.

On average, wheat straw contains about 5% of silicon oxide. To fully utilize the heat energy inside wheat straw and maximally produce silicates, especially metasilicate, some fine quartz powder needs to be added to the mixture of wheat straw and alkali metal compound, with the appropriate weight ratio as: wheat straw : sodium hydroxide : quartz = 10 : 1.5 : 1.

As a note, said biomass materials can also be added with ashes of rice straw, rice husks, wheat straw, stalks of corn and sorghum, so that the silicon element and carbon as a heat source inherently contained in the ashes can be fully utilized.

Unlike Embodiment 2, the step of evenly mixing the biomass materials and reactants is carried out while piling up them into the furnace.

To make the biomass materials like the fuel blocks 2 inside the furnace to form the central ventilation channel 1 in alignment with the furnace's vent 5, a cylindrical bar can be put into the furnace 4 first, and taken out later after all of the materials have been piled into the furnace 4, or simply insert a cusp rod into the center of the cylindrical furnace after all of the materials have been piled into the furnace. In practice, the cylindrical bar can be replaced with a polygonal ventilating structure formed with a few poles, and the structure may not be taken out.

In a concrete scheme, air-dry rice straw and powdery or flaky alkali metal compound can be layered and compressed into a furnace of 30 - 60 cm in diameter and 50 ∼ 150 cm in height. Simultaneously, the central ventilation channel of 3.5 ∼ 20 cm in diameter is formed to ensure there is adequate airflow while the biomass materials are in combustion. The specified size of the ventilation channel is for the purpose of illustration here, and should not be regarded as a constraint to the technical scheme. Certainly, the biomass materials along with the reactants can also be weaved into ropes, and then the ropes are pinched inside the furnace around the central vent. That the biomass materials are compressed or weaved into ropes is to increase the density of biomass materials, and thereby increases output of silicates. Biomass materials of stalk types can be crushed and cleaned first, but such steps are not necessarily needed.

For example, when the mixture of rice straw and sodium hydroxide starts combusting and reacting, the sodium hydroxide begins to melt and flow downwards to quickly react with silicon oxide so that the chemical reaction takes place sufficiently to produce solid-phased sodium silicate. To efficiently utilize the furnace and carry out circular combustion and silicate synthesis, the optimal method is to have fierce combustion by igniting the biomass materials and keeping blowing air from the top so that the volatile matters inside biomass materials can be volatilized completely after 5 - 10 minutes combustion. Note that such method can also be used to specifically remove the volatile matters inside biomass materials and bring about fixed carbon as a final product. When the temperature of the biomass materials reaches above 800°C, the sodium silicate generated at the first stage can continue taking part in the chemical reaction to increase the modulus of the sodium silicate. After 15 - 30 minutes thorough combustion of the mixture of biomass materials and sodium hydroxide, lumpy sodium silicate in appearance of white or blue-green or brown with some residual black carbon and activated charcoal can be generated. The mixture that is still glowing and falls down to the bottom chamber of the furnace can continue the synthesis of sodium silicate with further air supply and combustion. With this factor into consideration, more alkali metal compound can be placed on top of the biomass materials.

In practice, biomass materials are loaded slightly more than what the reaction requires in order to fully utilize the high-valued alkali metal components. So there is some ashes leftover to be blown away from the lumpy or granular sodium silicate. In loading the biomass materials and alkali metal compound, certain amount of the leftover ashes can be added, where the ashes can be pre-mixed with a proportional amount of alkali metal compound, or the dregs such as condensed paper milling residues, furol dregs and etc., associated with the processing of biomass materials can be added, as long as the combustion temperature can be over the melting point or decomposition temperature for alkali or salt ingredients (such as sodium hydroxide melting point is -320 °C ; potassium hydroxide melting point is ∼406 °C ; carbonate sodium's starting decomposition temperature is usually ∼850 °C, but can be reduced to ∼500°C in presence of silicon oxide; potassium carbonate's starting decomposition temperature is -890 °C). The dregs include the concentrated waste from black or red effluent in papermaking, furol dregs, and so on. The process makes full use of the silicon oxide inside the biomass materials, and sodium and/or silicon contained in the dregs, so that the dregs along with the biomass materials after being used for industrial effluent processing have been properly treated and utilized as a resource to protect the environment.

Since the temperature inside the fuel blocks 2 may be uneven, the output product of silicates may be of various modulus. A weight analysis has shown that 1.6kg sodium silicate can be produced when 1kg sodium hydroxide is mixed with adequate rice straw, which may produce -1.4kg sodium metasilicate theoretically. Therefore, the average modulus of the final sodium silicate product is about 1 ∼ 1.5.

The reaction product, mainly sodium metasilicate, after being crushed and separated from the black carbon, can dissolve into cold water within a few seconds, and a small amount of brown matters is left without being dissolved, which are mainly sodium silicates of modulus greater than 1, such as sodium disilicate. The loose or lumpy sodium silicate has the characteristics of instant dissolvability. The generated sodium silicate, when its modulus M=1 or 2, should be amorphous or crystal (increasing the heat preservation time can facilitate the formation of crystal sodium silicate). Depending on the allocated reactants and reaction temperature, the modulus of the final sodium (or potassium) silicate, i.e., the ratio between SiO₂ and Na₂O (or K₂O), is within the range between 0.5 and 4.

According to an examination through dissolving it into water, the aforementioned alkali metal silicate product mainly contains sodium or potassium silicate, carbon leftover and salt compounds formed by impurities of metal oxide inside biomass materials (such as sodium aluminate generated from the reaction between aluminum oxide and sodium oxide, or sodium aluminosilicate generated from the reaction between aluminum oxide and sodium silicate). The product has the characteristics of instant dissolvability: the dissolution speed is greater than 0.5 g/sec in a solution of 10 grams of sodium silicate every 100 grams of water. The solution is transparent and alkaline and contains a small amount of gel-like material, a hydrate of the compound generated from the chemical reaction between sodium hydroxide and a very little amount of metal oxide compounds (such as aluminum oxide, magnesia oxide, calcium oxide) inside biomass materials. The residual carbon can be used as an effective ingredient in the silicate product, because the carbon is loose, porous and hence effective in adsorption. Therefore, the reaction product can be used directly as an additive in detergent. Besides, the above loose silicate product can be used to produce powdery silicate of various specified grain sizes through smashing and sieving processes.

### Embodiment 4

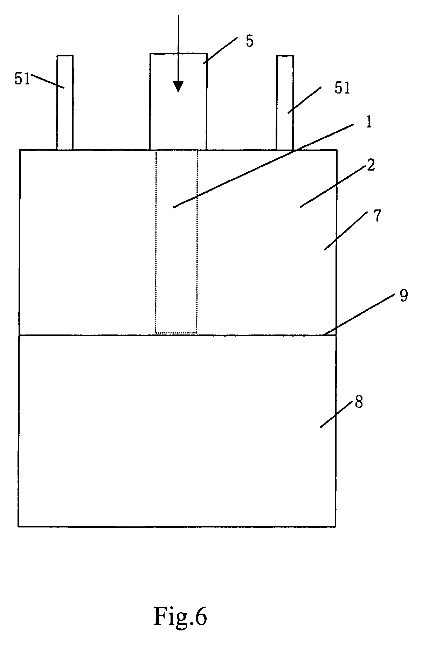

This embodiment shares the same principle and effect as Embodiment 3 above, except for the difference of the furnace in use. As is shown in FIG. 6, the furnace has the central vent 5 that is in alignment with the central ventilation channel 1 of fuel blocks 2. In addition, around the central vent 5 there are multiple auxiliary vents 51, through which air can be blown into the furnace intermittently or continuously. The furnace also has grate 9 with tracks to divide the furnace into top and bottom combustion chambers 7 and 8. The mixture of biomass materials and reactants is sent into the top combustion chamber 7 through a pulley along the tracks of the grate 9.

In this embodiment, biomass materials and reactants can be sent into the furnace dynamically at any time, and can be constantly stirred around the furnace's periphery, i.e., the boundary of the combustion tube, to have a full combustion. Of course, the biomass materials along with the reactants can be either pre-mixed and made into fuel blocks or weaved into ropes, and then the fuel blocks or ropes are pinched into the furnace intermittently or continuously to increase production. Partially combusted biomass materials or ashes leftover as well as sodium/potassium-containing materials drop into the bottom combustion chamber 8 and continue combusting and reacting. The reaction production can be taken out intermittently or continuously from the bottom of the chamber 8, which is also used as a vent for smoke.

As a demonstration for the method in which combustion is facilitated through blowing air intermittently into the top combustion chamber 7 from the central vent 5, a furnace of 3 meters in height and 2 meters in diameter can be loaded with 500 kg rice straw and 100 kg caustic soda on top of the grid grate 9 to produce about 150 kg solid products (mainly sodium metasilicate). The grate 9 can be in a track structure, so that the mixture of biomass materials and alkali or salt reactants is easier to be sent into the top combustion chamber 7 through a pulley along the grate's tracks. To increase the furnace's height and diameter will increase product yield correspondingly. If the furnace's diameter is big, or while combustion is at the ending stage, some small amount of air can be blown into the furnace through the auxiliary vents 51 to enable the combustion to go from the top to the bottom evenly within the furnace.

### Embodiment 5

This embodiment shares the same principle and effect as Embodiment 4 above. The difference is that a heavy and grid-shaped object is put on top of the biomass materials, and the heavy object can move freely downwards along with the advance of combustion to keep the biomass materials pinched inside the furnace, which can avoid forming cavities in the shrinking biomass materials over the process of combustion, stabilize combustion and facilitate the chemical reactions to take place between sodium/potassium reactants and the biomass materials.

### Embodiment 6

This embodiment shares the same principle and effect as Embodiment 3 above. The difference is that the biomass materials in this embodiment include both silicon-containing and silicon-free biomass materials, and some reactants of alkali metal compound and fine quartz powder is added proportional to the average equivalent weight of silicon contained in the biomass materials.

### Embodiment 7

This embodiment shares the same principle and effect as Embodiment 3 above. The difference is that the biomass materials in this embodiment include both silicon-containing and silicon-free biomass materials, and the reactant includes alkali metal carbonate only. Carbonate decomposition temperature is higher, and therefore the reaction temperature needs to be increased to have a complete chemical reaction. So more heat energy can be obtained by adopting a higher proportion between biomass materials and alkali metal carbonate.

For example of sodium carbonate, a weight analysis has shown that when the proportion between fine powdery sodium carbonate and rice straw is 1:5 or more, white or blue-green granular or small lumpy sodium metasilicate of theoretical equivalence can be produced as a main product, along with unused ashes and a small amount of sodium carbonate leftover from the reaction. Because straw ashes and sodium silicate powders or sodium carbonate powders are easy to become fly ashes, they can be made into some block form by mixing with a small amount of water or mixing with rice straw in advance before entering the furnace.

The reaction of carbon dioxide with solution of sodium silicate generates hydrate silicon oxide (also known as silica white) and reusable sodium carbonate, where the carbon dioxide can be obtained from the reaction between sodium carbonate and silicon oxide in biomass materials as well as that released from combustion of biomass materials.

### Embodiment 8

This embodiment shares the same principle and effect as Embodiment 3 above, except for the steps of pre-mixing biomass materials and reactants. To have a thorough mix of biomass materials and alkali metal compound, the steps include:
- dissolve the soluble alkali metal compound into water;
- immerse the biomass materials in the solution;
- dry up the mixture of biomass materials and reactants.

However, in a state of water solution, alkaline substances are easy to react with the organic matters in biomass materials to generate sodium salts, such as alkali metal lignin, alkali metal cellulose and so on, whose melting point is higher than sodium alkali metal compound, which requires higher temperature for the chemical reaction and hence makes this method not optimal.

Certainly, the mixture of dried biomass materials and reactants can be made into fuel blocks with a central combustion channel or weaved into ropes.

### Embodiment 9

This embodiment shares the same principle and effect as all of the above embodiments, except for the improvement: the biomass materials or the mixture of biomass materials with reactants in form of fuel blocks or straw ropes, before ignition, are thoroughly soaked with fine coal powder, heavy oil or ethanol to increase combustion temperature and hence to generate silicate of higher modulus.

### Embodiment 10

This embodiment shares the same principle and effect as all of the above embodiments. In this embodiment, the heat released from combusting biomass materials can be utilized as heat energy in burning and processing industrial waste. The concrete steps include:
A. Use biomass materials to filter industry effluent and collect the solid residues from the effluent;
B. Burn the used biomass materials to utilize the heat released from the combusting biomass materials and burn out the arrested solid residues.

In order to facilitate combustion of the biomass materials, an additional step, added between Step A and Step B, is to dry the wet biomass materials that contain solid residues.

The industry effluent in papermaking contains ingredients of alkali metal and/or silicon and/or sulfur because a large amount of alkali is used in the process of pulp production or recycled paper de-inking. After the filtration process of papermaking industry effluent using biomass materials, such as rice straw and wheat straw, as a filtering net, the used biomass materials contain ingredients of alkali metal and/or sulfur in addition to silicon inherently inside the biomass materials. The wet biomass materials along with the attached solid residues can be loaded into the furnace after being properly dried up or directly mixed with some dry biomass materials. According to the amount of alkali metal in the effluent, additional alkali metal compound can be added, so that silicate product can be maximally produced while industrial waste is being burned and processed. Moreover, the heat energy released from combustion of biomass materials can also be utilized in papermaking process. In all, the released heat from biomass materials combustion can be applied simultaneously to three purposes: burning waste, producing silicate product and papermaking, so that the heat utilization efficiency reaches almost 300%. This method can also be used in processing effluent from the steam boiling in calcium-based papermaking, and in producing a compound of calcium oxide and silicon oxide and/or calcium silicate. In addition, the filtered solution that contains dissolved inorganic and organic alkali or salt as well as other organic ingredients can be reused in the steam boiling of paper pulp or other applications.

Finally, alkali metal silicate of relatively high purity can be obtained by separating it from other impurities.

### Embodiment 11

All of chemical reactions involved in Embodiment 1 to 10 above generate alkali metal silicates by utilizing both silicon and heat energy inherently contained in the biomass materials. This embodiment mainly utilizes the carbon element and heat energy in biomass materials to redox sulfates. As a note, the biomass materials used in this embodiment are silicon-free biomass materials, such as weed, sawdust, or tree branches and leaves. If the biomass materials contain silicon element, then the chemical reaction involved is for producing silicate, just like those specified in Embodiment 1 to 10 above.

In practice, some ashes of weed, sawdust, or tree branches and leaves can also be added to the silicon-free biomass materials.

For example of sodium sulfate, its decomposition temperature is 884°C, and the decomposition reaction involves carbon element as is shown below:

Na₂SO₄ + C → Na₂SO₃+CO↑

2Na₂SO₄ + C → 2Na₂SO₃+CO₂↑

Or if hydrocarbon in the biomass materials is involved, the reaction is:

Na₂SO₄ + CnHm → Na₂SO₃+ H₂O↑ + CO₂↑

Carbon helps redox sodium sulfate into sodium sulfite which is easy to react with silicon dioxide. With additional carbon, the following reaction will take place:

Na₂SO₄ + 4C → Na₂S + 4CO↑

If silicon dioxide is available, the reaction will be:

nSiO₂ + Na₂S + 3/2O₂ → Na₂O·nSiO₂ + SO₂↑

The final reaction product varies if the ratio between biomass materials and sodium sulfate is different. The optimal ratio is 4 - 8 : 1. The analysis after the reaction has shown that: alkali metal sulfite is the main reaction product if the ratio is 4 - 6 : 1; alkali metal sulfite and alkali metal sulphide are the main reduction product if the ratio is 6 - 7 : 1; alkali metal sulphide is the main reduction product if the ratio is 7 - 8 : 1 and the reaction temperature is kept at 884°C or above through biomass materials combustion.

The above reactions have shown that carbon accelerates decomposing sulfate into sulfite that has lower melting point and higher activeness, and is easier in reaction with silicon oxide. If acidic sulfur dioxide produced from the reaction of sodium sulfate or sodium sulfite with silicon oxide inside biomass materials reacts with dissolved sodium silicate, the reaction will generate hydrate silicon oxide (also known as silica white) and reusable sodium sulfate or sodium sulfite; or acidic sulfur dioxide can be dissolved into water for papermaking or hydrolysis of biomass materials, and the hydrolysis product can be used as raw materials in fermentation to produce industrial ethanol or fodder yeast. Likewise, sulfate can be calcium sulfate, ferric sulfate, magnesium sulfate, etc. If the biomass materials are silicon-free, the reaction product will be sulfur oxide and the corresponding metal oxide as is shown:

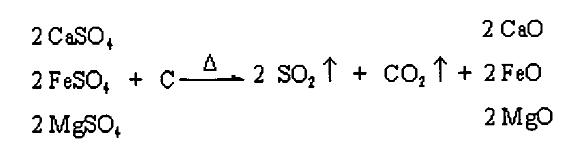

### Embodiment 12

The difference between this embodiment and all of the above embodiments is that the reactant is nitrate and the biomass materials are selected from silicon-rich rice straw, rice husk, wheat straw, corn and sorghum stalks or their ashes. As an example of sodium nitrate, because sodium nitrate can have a fierce exothermic reaction with carbon element and silicon oxide, especially the small silicon oxide ions or molecules inside the tissue of biomass materials, this embodiment utilizes carbon element, silicon oxide and heat energy in biomass materials. After the biomass materials along with the reactant are ignited or the reaction temperature is made higher than the melting point 307°C of sodium nitrate, the following fierce volume-expansion reaction will take place:

4NaNO3 + 5C+ 2SiO2 → 5CO2 + 2N2 + 2Na2SiO3

Or sodium nitrate reacts with hydrocarbon inside biomass materials or generated through thermal decomposition:

NaNO3 + CnHm+ SiO2 → CO2 + H2O + N2 + Na2SiO3

Therefore, this mixture cab be used as dynamite, with the advantage that biomass materials, especially those containing silicon oxide or ashes from partially combusted silicon-containing biomass materials (including partially combusted carbon and silicon oxide) can be used to replace sulfur and carbon powder which have been used in producing ordinary black powder (S + C + NaNO₃ → CO₂ + Na₂S + N₂). Likewise, using potassium nitrate (its melting point: 334°C) to replace sodium nitrate can have the same effect.

In the preferable scheme, dissolve nitrate into water first and then immerse the biomass materials in the solution to mix with nitrate thoroughly and evenly. Before the biomass materials are ignited, the mixture can be dried to remove moisture partially or completely, or simultaneously crushed into small pieces. Granular biomass materials, such as rice husks or other grain husks, are more preferable.

### Embodiment 13

The difference between this embodiment and all of the above embodiments is that the reactants include the concentrated white sludge in papermaking, which contains calcium carbonate, and a small amount of sodium alkali and sodium salt, and the biomass materials can either contain silicon or be silicon-free. Because the decomposition temperature of calcium carbonate is in the range of 800∼1300C and the combustion temperature of biomass materials can reach such high, biomass materials in this embodiment, while combusting in a high temperature, can decompose calcium carbonate into carbon dioxide, calcium oxide and the blended product of silicon oxide and/or calcium silicate in plant ash.

Likewise, this embodiment is also applicable to pyrite refinement, in which the reaction temperature is in the range of 300∼1300°C , and the main reaction products are sulfur oxide and ferric oxide.

### Embodiment 14

The difference between this embodiment and all of the above embodiments is that the source of heat required for the reaction is not from biomass materials, but from commonly-used industrial fuels of high energy density, such as coal. After the fuels are evenly mixed with the reactants, the mixture is loaded into the furnace, so that the industrial fuels while in combustion are in direct contact with the reactants and that the heat released from combusting industrial fuels can directly heat up reactants to the reaction temperature and cause the chemical reaction to take place.

In this embodiment the reactants include alkali metal compound (e.g., alkali metal sulfate, alkali metal carbonate and so on) as well as quartz sand, and the main reaction product is alkali metal silicate.

Certainly, the reactant may also include alkali metal sulfate or other metallic sulfate, so that a reduction reaction takes place to generate the main product of sulfur oxide and the corresponding metal oxide compound. Or, the reactant includes alkali metal carbonate or other metallic carbonate, so that a decomposition reaction takes place to generate the main product of carbon dioxide and the corresponding metal oxide compound.

In the precondition that explosion-proof has been ensured, heavy oil or solidified ethanol can be considered as an energy source to directly mix with the reactant, which results in enhanced energy utilization efficiency, reduced reaction equipment, low investment and simplified operational techniques.

The essence of the present invention is to provide an effective method, in which the solid fuel of biomass materials mixes with reactants, and the fuel while in combustion can heat up the reactants onsite to the reaction temperature, so that only one set of reaction equipment is needed. The method is characterized to have enhanced energy utilization efficiency. Obviously, according to the identical principle, besides the specified schemes where reactants are directly mixed with biomass materials and coal, the heavy oil liquid fuels, such as gasoline, coal oil, diesel, can also be used to mix reactants to achieve the same technique effect as is specified in this invention. Certainly, organic liquid fuel, such as ethanol, can directly mix with the reactants to achieve the effect that the fuel while in combustion can heat up the reactants onsite to the reaction temperature. Moreover, while ethanol is used instead of biomass materials to mix directly with the reactants, purity of the reaction product will be enhanced. These similar or identical schemes must be within the extent of the present invention.

Certainly, the industrial chemical reactions specified in the present invention are not limited to the aforementioned decomposition, reduction, oxidation or synthesis. Within the extent of the present invention also include other chemical reactions whose reaction temperature is within the range specified in this invention and whose method is to cause the reaction to take place by directly mixing and combusting industrial fuel with the reactants.

## Claims

1. A method of utilizing biomass materials, is **characterized in that,** the biomass materials are directly mixed with reactants, and the heat released from combusting biomass materials directly heats up the reactants to the reaction temperatures and cause the chemical reactions to take place.

2. A method as claimed in claim 1, wherein the main product of the chemical reactions is alkali metal silicates.

3. A method as claimed in claim 2, wherein the reactants include alkali metal compounds, coal powder and fine quartz powder.

4. A method as claimed in claim 2, wherein the biomass materials contain silicon-free biomass materials, the reactants contain silicon-containing minerals and alkali metal compounds.

5. A method as claimed in claim 4, wherein the silicon-free biomass materials are selected from weed, sawdust, and tree branches and leaves; the alkali metal compounds are selected from hydrates of alkali metals, alkali metal salts of inorganic acids and alkali metal salts of organic acids; the silicon-containing minerals are selected from fine quartz powder, diatomite and white clay.

6. A method as claimed in claim 2, wherein the biomass materials contain silicon-containing biomass materials, and the reactants include alkali metal compounds in an amount equivalent to the silicon contained in the biomass materials.

7. A method as claimed in claim 6, wherein the silicon-containing biomass materials are selected from rice straws, rice husks, wheat straws, corn stalks and sorghum stalks; the alkali metal compounds are selected from hydrates of alkali metals, alkali metal salts of inorganic acids and alkali metal salts of organic acids.

8. A method as claimed in claim 7, wherein the hydrates of alkali metals are selected from sodium hydrate, potassium hydrate and calcium hydrate; alkali metal salts of inorganic acids are selected from sodium carbonate, potassium carbonate, sodium sulfate, potassium sulfate, sodium chloride and potassium chloride, sodium phosphate and potassium phosphate; alkali metal salts of organic acids are selected from sodium and potassium organic acid salts.

9. A method as claimed in claim 7 ,wherein the silicon-containing biomass materials are added with ashes of rice straw, rice hulls, wheat straw, corn stalks and/or sorghum stalks.

10. A method as claimed in claim 2, wherein the biomass materials contain both silicon-containing and silicon-free biomass materials; according to the average amount of silicon in the biomass materials, an equivalent amount of alkali metal compounds and fine powdery quartz are added into the biomass materials.

11. A method as claimed in claim 1 ,wherein the chemical reactions are used to incinerate industrial wastes, and the specific steps include:
A. using the biomass materials to filter industrial effluent and to arrest the solid residues from industry effluent;
B. combusting the biomass materials mixed with the solid residues to incinerate industrial.

12. A method as claimed in claim 11, wherein between steps A and B is added another step that the mixture of the biomass materials and the solid residues is dried.

13. A method as claimed in claim 11, wherein the solid residues obtained from step A include bagasse, furol dregs, black and red liquid wastes from papermaking industries; between steps A and B is added a step C that an equivalent amount of alkali metal compounds is added according to the amount of silicon contained in the mixture of biomass materials and the solid residues to produce alkali metal silicates while industrial wastes are incinerated by the combustion of biomass materials.

14. A method as claimed in claim 13 ,wherein subsequent to step C is added a step D that alkali metal silicates, as the main reaction products, are separated and collected.

15. A method as claimed in any of Claims 2-10, 13 or 14 ,wherein the reaction products mainly are powdery or lumpy alkali metal silicates and/or alkali metal metasilicate and/or residual carbon.

16. A method as claimed in claim 1, wherein the chemical reactions make use of the carbon in the silicon-free biomass materials to reduce sulfates.

17. A method as claimed in claim 16, wherein the silicon-free biomass materials are selected from weed, sawdust, or tree branches and leaves, the ratio between the silicon-free biomass materials and sulfate is 4 - 8 : 1

18. A method as claimed in claim 17, wherein the silicon-free biomass materials are added with ashes of weed, sawdust, or tree branches and leaves.

19. A method as claimed in claim 17, wherein sulfite is the main reaction product if the ratio between the biomass materials and sulfate is 4 - 6 : 1; sulfite and sulphide are the main reduction product if the ratio is 6 - 7 : 1; sulphide is the main reduction product if the ratio is 7 - 8 : 1.

20. A method as claimed in claim 1, wherein the chemical reaction utilizes carbon element, silicon element and heat energy in biomass materials to react with nitrates and result in a fierce volume-expansion reaction for making black powders.

21. A method as claimed in claim 20, wherein the biomass materials are selected from granular biomass materials containing rice husks or other grain husks, sawdust; or selected from granular biomass materials from crushed straw, forestry products.

22. A method as claimed in claim 1, wherein the chemical reactions are decomposition reactions of reactants in a temperature range of 300 - 1300°C.

23. A method as claimed in claim 22, wherein the reactant is calcium carbonate, and the main reaction product is calcium oxide.

24. A method as claimed in claim 22, wherein the reactants are pyrites, and the main reaction products are sulfur oxides and iron oxide.

25. A method as claimed in any of Claims 1 ∼ 19 and 22 ∼ 24, wherein the specific steps are:
a) placing biomass materials in a furnace;
b) igniting the biomass materials;
c) while the biomass materials are in combustion, reactants are spread into and directly mixed with the biomass materials.

26. A method as claimed in any of Claims 1 ∼ 19 and 22 ∼ 24, wherein the specific steps are:
A. pre-mixing the biomass materials with reactants to form a mixture;
B. igniting the biomass materials to induce chemical reactions.

27. A method as claimed in claim 26, wherein between step A and step B is added a step C that the mixture of the biomass materials and reactants is placed in a furnace.

28. A method as claimed in claim 27, wherein the pre-mixing step is performed outside the furnace.

29. A method as claimed in claim 27, wherein between steps A and C is added a step that the biomass materials are mixed with fine coal powders, heavy oil or ethanol.

30. A method as claimed in claim 26, wherein the mixing step includes:
first dissolving the dissolvable reactants into water;
then, immersing the biomass materials fully in the solution;
and drying up the biomass materials after they are thoroughly mixed with the dissolved reactants; and mixing the insoluble reactants directly with the biomass materials if the reactants contain insoluble substances.

31. A method as claimed in claim 28, wherein the mixing step includes that the biomass materials together with reactants are weaved into ropes or made into fuel blocks.

32. A method as claimed in claim 27, wherein the pre-mixing step is performed inside the furnace.

33. A method as claimed in claim 32, wherein the biomass materials and the reactants are layered alternately inside the furnace.

34. A method as claimed in claim 33, wherein more of the reactants are put in the top portion of the fuel blocks and less in the low portion.

35. A method as claimed in claim 34, wherein another step is added that fine coal powders, heavy oil or ethanol is added into the furnace to directly mix with the biomass materials.

36. A method as claimed in claim 27, wherein there is an additional step that air is blown into the furnace after the ignition of the biomass materials.

37. A method as claimed in claim 27, wherein a heavy and grid-shaped object is put on top of the biomass materials, and the heavy object can move freely downwards along with the advance of combustion to keep the biomass materials pinched inside the furnace.

38. A method as claimed in claim 27, wherein the furnace contains a grate with tracks which divides the furnace into top and bottom combustion chambers; the mixture of biomass materials and reactants is placed through a pulley along the tracks to the top combustion chamber, during combustion in the top chamber, the residues from the top chamber fall down to the bottom chamber and continue to combust, and the chemical reactions are furthered.

39. A method as claimed in claim 27, wherein the furnace has a central vent.

40. A method as claimed in claim 39, wherein the pre-mixing step is performed outside the furnace.

41. A method as claimed in claim 40, wherein between the step B for ignition of biomass materials and step C for placing the biomass materials into the furnace, a step is added that the biomass materials are mixed with fine coal powders, heavy oil or ethanol.

42. A method as claimed in claim 40, wherein the mixing step includes:
first dissolving the dissolvable reactants into water;
then immersing the biomass materials fully in the solution; and drying the biomass materials after they are thoroughly mixed with the dissolvable reactants, and mixing the insoluble reactants directly with the biomass materials if insoluble reactants are contained.

43. A method as claimed in claim 40, wherein the mixing step includes that the biomass materials together with reactants are weaved into ropes, and then the ropes are pinched into the furnace with a central combustion ventilation channel in alignment with the furnace central vent.

44. A method as claimed in claim 42, wherein the dried biomass materials are compressed to form a block with a central combustion ventilation channel, and then the block is placed into the furnace with its ventilation channel in alignment with the central vent of the furnace.

45. A method as claimed in claim 40, wherein the mixing steps include:
compress the biomass materials mixed with the reactants to form a fuel block with a central combustion ventilation channel, and then place the fuel block into the furnace with the block's ventilation channel in alignment with the central vent of the furnace.

46. A method as claimed in claim 39, wherein the pre-mixing step is performed inside the furnace.

47. A method as claimed in claim 46, wherein the pre-mixing step includes that the biomass materials and reactants are layered alternately to form a fuel block with a central combustion ventilation channel, and the fuel block is placed into the furnace with its ventilation channel in alignment with the central vent of the furnace.

48. A method as claimed in claim 47, wherein more of the reactants are put in the top portion of the fuel block and less in the low portion.

49. A method as claimed in claim 46, wherein between the step of pre-mixing the biomass materials and the reactants and the step of combustion, there is an additional step that fine coal powders, heavy oil or ethanol is added into the furnace to mix with the biomass materials.

50. A method as claimed in claim 39, wherein after the step of igniting the biomass materials, there is an additional step that air is blown into the furnace through the furnace's central vent, to facilitate more thorough combustion surrounding the central combustion ventilation channel.

51. A method as claimed in claim 39, wherein a heavy and grid-shaped object is put on top of the biomass materials, and the heavy object can move freely downwards along with the advance of combustion to keep the biomass materials pinched inside the furnace.

52. A method as claimed in claim 39, wherein the furnace contains a grate with tracks which divides the furnace into top and bottom combustion chambers; the mixture of the biomass materials and reactants is placed through a pulley along the tracks to the top combustion chamber, during the combustion in the top chamber , the residues from the top chamber fall down to the bottom chamber and continue to combust and the chemical reactions are furthered.

53. A method of utilizing industrial fuels, is **characterized in that**, the industrial fuels and the reactants are loaded into the furnace, so that the industrial fuels while in combustion are in direct contact with the reactants and that the released heat can directly heat up reactants to the reaction temperature and cause the chemical reaction to take place.

54. A method as claimed in claim 53, wherein the industrial fuels are coal, heavy oil and solid ethanol.

55. A method as claimed in claim 54, wherein the reactants contain alkali metal compounds and quartz sand, and the main product from the chemical reactions is alkali metal silicate.

56. A method as claimed in claim 54, wherein the reactants contain sulfates, and the main reaction products are sulfur oxides and corresponding metal oxides.

57. A method as claimed in claim 54, wherein the reactants contain carbonates, and the main reaction products are carbon dioxide and corresponding metal oxides.
